# EUROPEAN PATENT APPLICATION

(11) **EP 4 830 523 A1**
(43) Date of publication of application: **28.10.2026**
(21) Application number: 25171979.5
(22) Date of filing: 23.04.2025
(51) Int. Cl.: A22C 11/00

(54) **HANDLING ARRANGEMENT AND METHOD**

(71) Applicant: Poly-clip System GmbH & Co. KG, 65795 Hattersheim (DE)
(72) Inventor: Jöst, Norbert, 65191 Wiesbaden (DE); Seelmann, Jan, 65795 Hattersheim a. M. (DE); Gerhardt, Lucas, 60528 Frankfurt (DE)
(74) Representative: Eisenführ Speiser

(57) **Abstract**

The present invention relates to a handling arrangement (1000) and a method for depositing horizontally oriented sausage-shaped products (S) received from a clipping machine (CM) for producing sausage-shaped products (S), in a storage frame (SF) arranged in a loading position and having at least one storage place. The handling arrangement (1000) comprises a manipulating device (100) for receiving and supporting a horizontally oriented sausage-shaped product (S), and for positioning a sausage-shaped product (S) on a storage place of a storage frame (SF). The handling arrangement (1000) includes a first drive unit (120) for vertically moving the manipulating device (100), and for positioning the manipulating device (100) in front of a storage place of a storage frame (SF), and a second drive unit (140) for horizontally moving the manipulating device (100) for positioning a sausage-shaped product (S) above and releasing onto a storage place of a storage frame (SF).

## Description

The present invention relates to a handling arrangement or device for handling sausage-shaped products, in particular to a handling arrangement for depositing an at least approximately horizontally oriented or aligned sausage-shaped products received from a clipping machine for producing sausage-shaped products in a storage frame arranged in a loading position.

For producing sausage-shaped products, such as sausages, packaging machines, such as clipping machines, are known, in which filling material, such as a flowable or granular filling material, is fed into a tubular or bag-shaped packaging casing which is stored or supported on a filling tube and which is closed at its front end by closure means, such as at least one closure clip, i.e. the end of the packaging casing facing in the feeding direction of the filling material. After a predetermined portion or amount of filling material has been filled into the tubular or bag-shaped packaging casing, the filled tubular or bag-shaped packaging casing is gathered by gathering means, a plait-like portion or section which is at least substantially free from filling material is formed thereto, and at least a closure clip is placed and closed on said plait-like portion by a clipping device for closing the portion of the tubular or bag-shaped packaging casing just filled.

If it is intended to store or deposit sausage-shaped products on a rod-like or rod-shaped element, such as a smoking rod, e.g. for further treatment such as cooking or smoking, a suspension element, such as a suspension loop, can be attached to one end of each sausage-shaped product by a closure clip that closes the respective end of the respective sausage-shaped product. The sausage-shaped product is suspended on a rod-like element, which may be stored in a storage frame or carriage for further treatment.

However, it is also possible to store a sausage-shaped product lying on a horizontally arranged storage plane or location of a storage frame or carriage. In this case, it is not necessary to provide a sausage-shaped product with a suspension element.

From US patent 7,563,158, a system for loading sausage-shaped products onto a storage rack is known. The system comprises a rack loading apparatus which is a conveyor having a loading side for receiving products and an unloading side for discharging products, a positioner to align a rack with the unloading side, and a load pusher to discharge the products from the unloading side of the conveyor onto the rack.

With this known system, sausage-shaped products may reliably be stored on a storage plane of a storage rack. However, dependent on the nature of sausage-shaped product, in particular the type of tubular casing and/or the kind of filling material, such as vulnerable casing and/or filling material and/or large and/or heavy sausage-shaped products, the risk exists that damages to the sausage-shaped products may occur caused by rolling or shifting the sausage-shaped products over a surface, or the products bumping into each other or an element of the storage frame.

Thus, it is an object of the present invention to overcome the above mentioned drawbacks and to provide a handling arrangement and a method for dealing with horizontally oriented sausage-shaped products that reduce the risk of damage to the products during handling and makes the handling of sausage-shaped products safer.

According to the present invention, there is provided a handling arrangement for depositing an at least approximately horizontally oriented or aligned sausage-shaped product received from a clipping machine for producing sausage-shaped products, in a storage frame or carriage provided or arranged in a loading position and having at least one storage place, preferably several storage places distributed across several storage levels. The handling arrangement comprises a manipulating device for receiving and supporting an at least approximately horizontally oriented or aligned sausage-shaped product, and for depositing or placing a sausage-shaped product on a storage place of a storage frame or cart. The handling arrangement includes a first drive unit for moving at least approximately vertically the manipulating device, and for positioning the manipulating device in front of a storage frame, in particular in front of a storage level or storage plane of the storage frame, and a second drive unit for moving at least approximately horizontally the manipulating device for positioning a sausage-shaped product above and releasing onto a storage place or location of a storage frame or carriage.

The inventive arrangement enables a sausage-shaped product to be placed directly on the storage place without being rolled or shifted over a storage surface or the like, thus avoiding additional stress on the sausage-shaped product and preventing possible damage.

In the inventive handling arrangement, the manipulating device comprises support or supporting elements, preferably two support elements for supporting a horizontally oriented sausage-shaped product. By means of the support elements, the sausage-shaped product is securely held during the deposition process.

It is preferred that the support elements each comprises a bar-shaped element arranged at least substantially parallel to each other in a common at least approximately horizontal plane, whereby a sausage-shaped product is securely held with a minimal area to the manipulating device.

In an advantage configuration of the handling arrangement, the manipulating device comprises a drive unit for moving the support elements, at least between a receiving or pick-up position, in which a sausage-shaped product is received from a clipping machine, and a release position, in which the sausage-shaped product is released from the manipulating device. The sausage-shaped product may thereby be positioned directly onto the final storage place of the storage frame.

The release position is preferably determined by the diameter of a sausage-shaped product to be handled. Of course, other or additional parameters can also be taken into account. The product can be deposited by evenly moving apart the supporting elements so that a product can be slowly and evenly deposited on a designated storage location, i.e. the product slides gently down between the supporting elements that are moving apart or have moved apart, in the direction of the storage location.

The receiving position is preferably determined depending on a product to be handled. For a product with a very small diameter, the receiving position can be achieved with the supporting elements fully together, i.e. touching each other. It is also possible that the supporting elements have a distance in the receiving position, measured perpendicular to their centre line. The distance can be selected depending on the diameter of a product to be handled. Of course, other or additional parameters can also be taken into account.

The support elements can be bar-shaped and preferably may have any suitable cross-sectional shape. It is preferred that the support elements have oval or circular cross-sectional shapes. It is further preferred that the support elements, at least in the contact area with the sausage-shaped products, have no sharp edges or the like. Hence, it is possible that the support elements can have any cross-sectional shape outside the area of contact between a product and the support elements wherein the cross-sectional shape of each support element can be different.

In an advantageous configuration, the drive unit of the manipulating device is adapted to reversibly move the support elements from each other between the receiving position and the release position. This allows sausage-shaped products to be placed gently on the storage place without putting any strain on the casing material and/or affecting the filling material.

In a further advantageous configuration, the movement of the support elements is guided by a forced guide or guidance system. This enables a reliable and constant handling of sausage-shaped products.

The drive unit of the manipulating device may be of any suitable design. It is preferred that the drive unit includes a rotary cam plate. The support elements have first ends and second ends, and the second ends are coupled to the drive unit, with guide cams arranged at their second ends. Guide cams enable a smooth movement of the support elements, further reducing the risk of damage.

The cam plate has a central axis and being rotary driven by a drive motor, e.g. an electric motor or servo motor. The cam plate comprises a first guide groove in which a guide cam of the first support element engages, and a second guide groove in which a guide cams of the second support element engages. This causes the support elements to move along paths of motion that are defined by the shape or form/design of the guide grooves.

In an advantageous design, the manipulation device comprises a lever arrangement having two pivot levers, each having a first and a second end, the first ends of the pivot levers being pivotally coupled or connected to each other to form a common pivot point, and the support elements being coupled or connected to the second ends of the pivot levers near or in the region of their second ends. The pivot levers support the support elements during their pivoting movement and provide an additional guidance for the support elements.

The guide grooves in the cam plate may have any suitable shape. Preferably, the first and the second guide grooves have an at least approximately arcuate shape, with first ends being located in the region of or close to the centre of the cam plate and second ends terminating at the outer circumference or periphery of the cam plate. The arc over which the grooves extend is preferably continuous. The radius of the arc can be constant or variable or combinations thereof, i.e. one or several sections of the arc have constant radii and another sections have variable radii. Preferably, the radius can be reduced continuously or discontinuously from the second end at the outer circumference of the cam plate to the first end near the centre of the cam plate. Preferably, the first and the second guide grooves have an arcuate shape and preferably at least approximately the shape of an involute.

The radii of the two guide grooves can also change differently and/or unevenly. The angle or angular dimension over which the guide grooves extend is determined, inter alia, by the path of movement of the support elements. The angle may preferably extend between approximately 45° and approximately 270° and more preferably between approximately 90° and approximately 180°, although other angular ranges or angle values are also possible. In a preferred embodiment, the angle values of both grooves are approximately 180°. It is also feasible for the angle ranges or single angle values of the two grooves to be different. This configuration allows the support elements to move gently in a smooth path, further reducing the risk of damage to the sausage-shaped products.

Preferably, the cam plate is rotated about an angle of approximately 90° to move the support elements between a position in which the support elements have reached a minimum distance from each other, preferably for receiving a sausage-shaped product (receiving position), and a position in which the support elements have reached their maximum distance, preferably to release a sausage-shaped product for depositing (release position). This configuration provides an optimal ratio between the movement of the cam plate and the movement of the support elements and thus an optimal handling time. However, dependent on the shape of the guide grooves, other angles of rotation of the cam plate may be realized to reversibly move the support elements between their minimum distance and their maximum distance.

In the position in which the support elements have reached the minimum distance to each other, the first ends of the guide grooves are arranged at least approximately horizontally and below the central axis of the cam plate. Moreover, in the position in which the support elements have reached the maximum distance to each other, the second ends of the guide grooves are arranged at least approximately horizontally and above the central axis of the cam plate. Thereby, jamming of the guide cams in the guide grooves is prevented due to an optimized angle of the force acting on the guide cams.

It is also possible that the cam plate is provided with a single guide groove, which is a combination of the first and second guide groove, that are connected by their first ends, i.e. the ends facing towards the centre of the cam plate. Such a single guide groove provides the same functionality as the first and second guide grooves, but may be easier be manufactured, in a single manufacturing step.

Further preferably, the distance between the support elements in the receiving position and in the release position may be adapted dependent on the size or diameter of the sausage-shaped product to be manipulated. This allows to handle a great variety of sausage-shaped products by the manipulating device.

As mentioned above, the distance of the support elements in the release position takes into account the maximum diameter of a sausage-shaped product to be handled. The release position for a certain type of sausage-shaped products can be reached before the support elements have moved to their maximum distance. A corresponding stop parameter for the drive unit can be entered into a control unit controlling the movement of the support elements. Alternatively or additionally, stop components can be provided which have to be set manually.

Independently or in coordination with the adjustment of the release position and/or depending on the type of a sausage-shaped product to be handled, the receiving position can be adjusted by means of a corresponding parameter that can be entered into a control unit for controlling of the manipulating device. As mentioned above, the minimum position can be reached when the two supporting elements abut to each other. Other distances of the support elements in the receiving position are also possible wherein the distance between the support elements is determined by preventing the sausage-shaped product from slipping between the support elements.

The movement of the support elements and/or the cam plate can be monitored by sensors. Sensors can be provided for when the maximum and/or minimum distance of the supporting elements, or any other location between the maximum and minimum position, is reached, for example in the form of contact sensors or proximity sensors. Alternatively or in addition, a rotary encoder can also be provided on the drive unit. re in contact or only a short distance apart.

The distance between the support elements in the receiving position and/or the release position may be adapted in different ways. It is possible to exchange the cam plate by another cam plate that has guide grooves of another shape. In a simple case, for varying the distance between the support elements in the receiving position and/or the release position, the angle of rotation of the cam plate may be varied.

In a further advantageous design, the manipulating device further comprises a guide block including guide grooves in which the second ends of the pivot levers engage, for guiding the second ends of the pivot lever. This improves and supports the guidance of the pivot levers as well as the support of the support elements.

The manipulating device may be controlled in various ways. Preferably, the manipulating device comprises a control unit adapted to control at least the operation of the manipulating device. This may include the time points for activating the drive unit, or the angle about which the cam plate is rotated.

Naturally, in the case that the manipulating device is part of a system, like a handling arrangement for depositing horizontally oriented sausage-shaped products in a storage frame, the manipulating device controlled by a control unit of said handling arrangement, or the control unit of the manipulating device may be coupled thereto.

In order to enable a save operation, the manipulating device may further comprise a sensor arrangement including at least one sensor device for at least detecting the presence or absence of a sausage-shaped product in the manipulating device.

Further sensor devices may be provided, which e.g. detect the movement of the drive unit or an angle or angular position of the cam plate. Based on the signals received from the sensor devices, the manipulating device may be operated. The operation of the manipulating device may be continued in the case that the sensor signals are in a permissible range, or be stopped if a sensor signal exceeds the permissible range.

In a further advantage configuration, the handling arrangement comprises a holding device for temporarily holding and securing a sausage-shaped product on the manipulating device. The holding device prevents a sausage-shaped product from falling-off from the manipulating device when it is placed on the support elements and/or during the movement of the manipulating device towards a storage place. The holding device can be designed as a bar or plate extending at least approximately parallel to the support elements of the manipulating device.

Further, the holding device can be moved reversibly from a starting position in an operating or holding position. The path of movement for the holding device between the start position and the holding position can be either along a linear path or along an at least approximately circular path. The length of the movement path of the holding device can be controlled by a control unit, preferably depending on the diameter of a sausage-shaped product. The diameter of the sausage-shaped product can be entered into an input unit of the control unit. Alternatively or in addition, the length of the movement path can also be controlled by the holding device containing a contact or proximate sensor that interrupts the movement of the holding device when it comes into contact with or close to a sausage-shaped product. Other sensors suitable sensors can also be used such as a rotary sensor.

In a preferred embodiment, the handling arrangement further comprises a transfer arrangement for transferring a horizontally oriented sausage-shaped product discharged from a clipping machine, to the handling arrangement. The transfer arrangement enables a safe take-over of a sausage-shaped product from a clipping machine as well as a safe take-over of a sausage-shaped product to the manipulating device.

The transfer arrangement may be realized by a single conveyor, like a belt conveyor, which extends preferably at least approximately horizontally and which receives a sausage-shaped product from a clipping machine or a storage device in which sausage-shaped products are stored, and which transfers the sausage-shaped product to the handling arrangement in an orientation, such that the manipulating device may directly receive said sausage-shaped product from the single conveyor. It is also possible that the transfer arrangement may include more than one conveyor, e.g. for positioning the sausage-shaped product in the correct orientation relative to the manipulation device.

Preferably, the transfer arrangement further includes an infeed conveyor for feeding a sausage-shaped product towards the handling arrangement. The infeed conveyor which can be a belt conveyor and which extends at least approximately horizontally, may be provided with separation elements for separating subsequent sausage-shaped products on the infeed conveyor. A separation element may be a flat plate extending from the surface of the infeed conveyor at least approximately perpendicular, thereby forming compartments in each of which one sausage-shaped product may be accommodated.

The separation elements may have any other suitable shape. A separation element may be realized by a suitable number of pins arranged in a row across the infeed conveyor, and extending at least approximately vertically therefrom. Such separation elements have a reduced contact area to the sausage-shaped product, whereby damages may be prevented.

In a further preferred embodiment of the handling arrangement, the transfer arrangement includes a receiving conveyor for receiving a sausage-shaped product discharged from a clipping machine which extends at least approximately horizontally. The receiving conveyor, the conveying direction of which is aligned to the discharge direction of a respective discharge conveyor of a clipping machine, may place a sausage-shaped product taken over from the clipping machine, in a defined position relative to the infeed conveyor. The receiving direction is further preferably aligned across to the infeed direction of the infeed conveyor. In a simpler configuration, the receiving conveyor may be realized by a row of rollers, about which the sausage-shaped product may roll while being released from the discharge device of the clipping machine. In this case, the receiving conveyor should incline in the discharge direction of the clipping machine, and should be provided with a stop, for positioning the sausage-shaped product in the correct position relative to the infeed conveyor.

Advantageously, the transfer arrangement further includes a pusher assembly, for pushing a sausage-shaped product received by the receiving conveyor in the infeed direction onto the infeed conveyor. The pusher assembly enables a secure transfer of a sausage-shaped product onto the infeed conveyor, and at a desired time point, such that a sausage-shaped product is positioned on a desired portion of the infeed conveyor, like a desired compartment formed by separation elements on the surface of the infeed conveyor. The pusher assembly includes a pusher drive, like a linear drive, the operation of which may e.g. be controlled by the control unit of the handling arrangement. The pusher device may comprise several pusher elements which extends in an even separation over the pusher assembly. It is also possible that only one pusher element extending longitudinally at least approximately parallel to the receiving conveyor is provided wherein its length is determined by the length of a sausage-shaped product to be handled. In case that different kinds of sausage-shaped products are to be handled, the length and/or the position of the one or several pusher elements can be adjusted or the pusher element(s) can be exchanged.

Further advantageously, the handling arrangement comprising a storage frame positioning arrangement, for positioning a storage frame or carriage in a loading position. The storage frame positioning arrangement thereby ensures the accurate position of a storage frame during the loading process.

In this embodiment, it is further of advantage that the storage frame positioning arrangement comprises a storage frame moving unit for moving the storage frame from a first loading position into an at least second loading position. The storage frame moving unit moves the storage frame in a manner that more than one sausage-shaped product may be stored on a same storage plane or level of a storage frame, and with a defined distance to the neighbouring sausage-shaped product or to an element of the storage frame, like a vertical corner post. For moving a storage frame, the storage frame moving unit may include a moving device which engages a storage frame and pushes the storage frame which rolls in the desired direction and about the desired length. Alternatively, a sledge-shaped moving device may be provided, which is shifted under the storage frame, and which lifts up the storage frame, such that the storage frame gets out of contact with the ground.

Preferably, the storage frame positioning arrangement includes a storage frame securing assembly, for securing the storage frame on the storage frame moving unit. Particularly during moving the storage frame moving unit, the storage frame securing assembly prevents the storage frame from tilting, and holds the storage frame in a defined position on the storage frame moving unit.

The storage frame securing assembly ma have any suitable design, and may e.g. include form fit arrangement, like projections which engage with respective elements of a storage frame, or a force fit arrangement, like a clamping mechanism.

It is further preferred that the storage frame positioning arrangement includes a storage frame alignment unit, for aligning the storage frame at least in an insertion position and/or a removal position. By the storage frame alignment unit, the storage frame may be held in a defined position, in which an empty storage frame may be securely be taken over by the storage frame moving unit, and in which a loaded storage frame may securely be released from the storage frame moving unit.

The storage frame alignment unit may include alignment elements in the form of, for example, hooks, which may engage elements of the storage frame, like its vertical corner posts, whereby the storage frame is pulled and secured in a predefined position. Alternatively, a clamping mechanism may be provided, or a guide mechanism including guide rails or bars, along which the storage frame is pushed into the predefined position.

In preferred embodiment, the inventive handling arrangement comprises a control unit adapted for controlling the operation of at least the handling arrangement. The control unit may be a single unit which controls all components and assemblies of the handling arrangement. It is also possible that selected assemblies or units may have their own control unit, which is connected to the control unit of the handling arrangement. The control unit of the handling arrangement can also be connected to control units or devices of other production devices for sausage-shaped products that are intended for use in production, either before or after the handling arrangement, with either one of these control units or the control unit of the handling device being a master control unit.

In particular, the control unit of the handling arrangement may be adapted to coordinate the operation of the loading arrangement with the operation of a clipping machine. Hence, the production process and the handling operation may be synchronized or adapted to each other. Moreover, in case of a malfunction or failure of the handling arrangement or the clipping machine, the defective machine or arrangement as well as the respective other arrangement or machine may be stopped for preventing unnecessary losses or damages to the handling arrangement or the clipping machine.

However, it is also possible that the handling arrangement, or its control unit, is coupled to the control unit of a clipping machine, such that the operation of the handling arrangement is controlled by the control unit of the clipping machine.

In order to enable a continuous handling operation, and to prevent damages to the sausage-shaped products, in a further preferred embodiment, the handling arrangement comprises a sensor system, which includes at least a first sensor device for at least detecting the presence or absence of a sausage-shaped product in the handling arrangement. The sensor system may include further sensor devices, on the basis of the sensor signals of which the handling arrangement may be controlled. Such additional sensor devices may detect the operation of the transfer arrangement, the drives of the manipulation device, the position of the storage frame or its loading or filling level. Moreover, said sensor devices may also be used to prevent damages to the handling system, e.g. in the form of collision sensors that prevent collisions between components of the handling arrangement. It has to be understood that the sensor system is coupled to the control unit of the handling arrangement.

The handling arrangement may be controlled on the basis of the signals received from the sensor system. The operation of the handling arrangement may e.g. be stopped in the case that no sausage-shaped product is positioned on the infeed conveyor or the manipulating device, or the storage frame is fully loaded with sausage-shaped products, or collisions between components of the handling apparatus are expected or may already be occurred. In all cases, a corresponding massage may be sent to an operator and/or an indication device, like a light signal, is activated.

It has further to be understood that handling assembly, or its control unit respectively, may be coupled to the clipping machine, such that the operation of the handling arrangement is controlled by the control unit of the clipping machine. However, it is also possible that the control unit of the handling device controls the operation of the clipping machine.

According to the present invention, there is further provided a method for depositing or placing an at least approximately horizontally oriented or aligned sausage-shaped product discharged from a clipping machine in a discharge direction, onto a storage place or location of a storage frame or carriage by a handling arrangement, with the handling arrangement including a manipulating device for receiving and supporting a horizontally oriented sausage-shaped product, and for positioning a sausage-shaped product on a storage place of a storage frame. The method comprises the steps of receiving by the manipulating device an approximately horizontally oriented sausage-shaped product discharged from a clipping machine, and positioning the sausage-shaped product on a storage place of the storage frame.

In the case that the handling arrangement further comprises a transfer arrangement for transferring a sausage-shaped product discharged from a clipping machine, to the handling arrangement, the method further comprises the step of receiving an approximately horizontally oriented sausage-shaped products discharged from a clipping machine, and transferring a sausage-shaped product by the transfer arrangement towards the handling arrangement.

The inventive method for depositing an approximately horizontally oriented sausage-shaped products discharged from a clipping machine onto a storage place of a storage frame thereby realizes all advantages explained in conjunction with the inventive system.

Further advantages and preferred embodiments of the present invention will be described in the following together with the drawings listed below. The expressions *"left", "right", "below"* and *"above"* used in the following description, are referred to the drawings in an alignment such that the reference numbers and the notation of the figures used can be read in normal orientation.
- Fig. 1:: is a schematic view showing the principal design of a clipping machine for producing sausage-shaped products;
- Fig. 2:: is a perspective view to a front side of a handling arrangement according to the present invention;
- Fig. 3:: is a perspective view to a rear side of the handling arrangement according to Fig. 2;
- Fig. 4:: is a perspective view to drive units of the handling arrangement according to Fig. 2;
- Fig. 5:: is a perspective view to the front side of a further embodiment of the handling arrangement according to Fig. 2;
- Fig. 6:: is a perspective view to the rear side of the handling arrangement according to Fig. 5;
- Fig. 7:: is a partial, perspective view to the handling arrangement according to Fig. 5;
- Fig. 8:: is a partial perspective view to the handling arrangement according to Fig. 5; and
- Fig. 9:: is perspective view to a manipulating device according to the present invention.

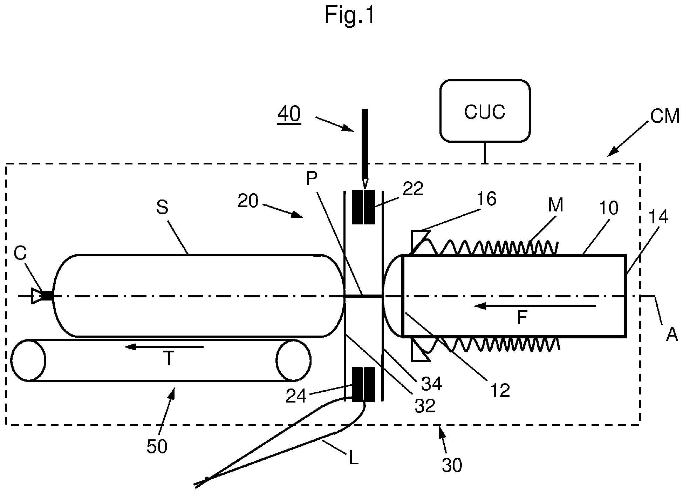

Fig. 1 shows the principal design of a clipping machine 1 for producing sausage-shaped products S, such as sausages, containing a flowable or granular filling material in a tubular packaging casing M. Clipping machine 1 has a filling tube 10, the central axis A of which extends in the longitudinal direction and, in the embodiment shown, horizontally. The longitudinal direction coincides with a filling direction F of a filling material.

Filling tube 10 has a discharge opening at its first end 12 for discharging a filling material fed or guided through filling tube 10 and a feeding opening at its second end 14 for feeding or introducing the filling material into filling tube 10 along filling direction F. The filling material is conveyed or fed from the feeding opening in filling direction F to the discharge opening of filling tube 10, for example by a feed pump of a filler being located right from system 1 shown in Fig. 1.

Moreover, a casing brake assembly 16 is arranged on and coaxially to filling tube 10 in the region of first end 12 of filling tube 10. Filling tube 10 is made of a suitable material, such as stainless steel. In addition to the horizontal orientation shown, filling tube 10 can also extend at an angle to the horizontal.

Tubular packaging casing M made of, for example, a thin sheet or film material is mounted or stored on filling tube 10 folded in an accordion like manner. Tubular packaging casing M is pulled-off during the manufacturing process of producing sausage-shaped products S, in particular by the feeding pressure, when the filling material is filled into tubular packaging casing M. Casing brake assembly 16 provides a preferably adjustable braking force which enables a controlled pulling-off of tubular packaging casing M from filling tube 10 during the filling process.

Clipping machine 1 further comprises gathering means 30 for gathering or shirring a section of the filled tubular packaging casing M and forming a plait-like portion or section P thereto. In addition, a clipping tool unit 20 is provided for closing a portion of tubular packaging casing M just filled by applying or attaching closure means, such as at least a first closure clip C, to plait-like portion P and preferably closing the front end of the next section of tubular packaging casing M to be filled subsequently by further closure means, such as a at least one further or second closure clip C. These components are all arranged downstream filling tube 10.

As can be inferred from Fig. 1, clipping tool unit 20 is positioned immediately downstream first end 12 of filling tube 10, and is aligned coaxially with filling tube 10, i.e. when closing tools of clipping tool unit 20 are reversibly moved together to close one or more closure means C, the axis of the plait-like portion P extends at least approximately coaxially to central axis A of filling tube 10.

Clipping tool unit 20 comprises first and second clipping or closing tools 22, 24 formed by at least one punch 22 and at least one die 24. It should be noted that punch 22 and die 24 can apply and close a single closure clip C for closing a just filled tubular packaging casing M, or can apply and close two or more closure clips C at the same time, at least a first closure clip C for closing the rear end of a just filled tubular packaging casing M for forming a complete sausage-shaped product S and at least a second closure clip C for closing the front end of a tubular packaging casing M to be subsequently filled.

For separating a sausage-shaped product S just produced from the remaining tubular packaging casing M stored or supported on filling tube 10, a cutting device 40 may be provided. Said cutting device 40 cuts the tubular packaging casing M, referred to filing direction F, upstream of closure clip C that closes the just filled portion of tubular packaging casing M. In case that two closure clips C have been applied to plait-like portion P by clipping tool assembly 20, cutting device 40 cuts plait-like portion P between said two closure clips C.

To remove a sausage-shaped product S just produced from clipping machine 1 in a transportation direction T, which at least substantially coincides with filling direction F, a discharge device 50 is arranged downstream clipping machine 1, which may be a belt conveyor comprising a conveyor belt and guide rollers.

For controlling clipping machine 1, a control unit CUC is provided, to which the components of clipping machine 1 are connected. Moreover, control unit CUC may also control peripheral devices, like discharge device 50 or a filler which feeds the filling material to clipping machine 1.

If it is intended to store a sausage-shaped product S in an at least approximately horizontal orientation or alignment, such for example large or heavy sausage-shaped product, to eliminate the risk of tearing off suspension element S by the weight of sausage-shaped product S. Such sausage-shaped products may be stored in their horizontal orientation on an at least approximately horizontally arranged storage plane or location of a storage frame.

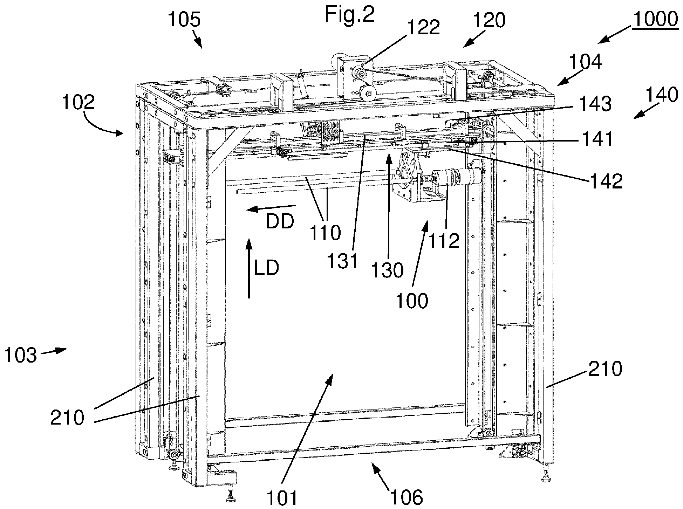

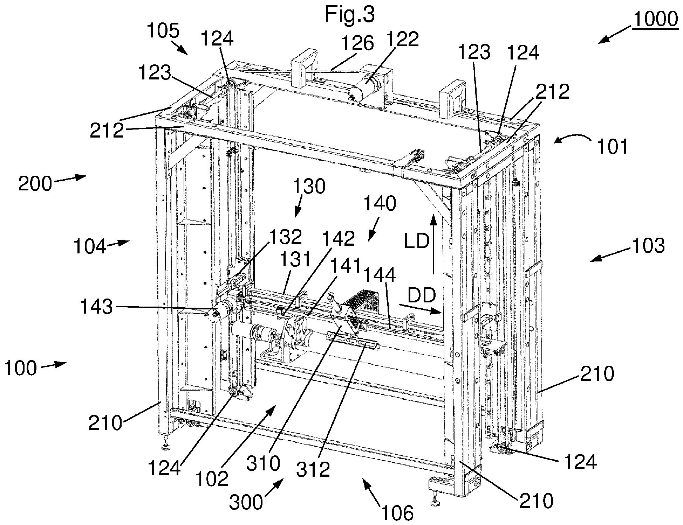

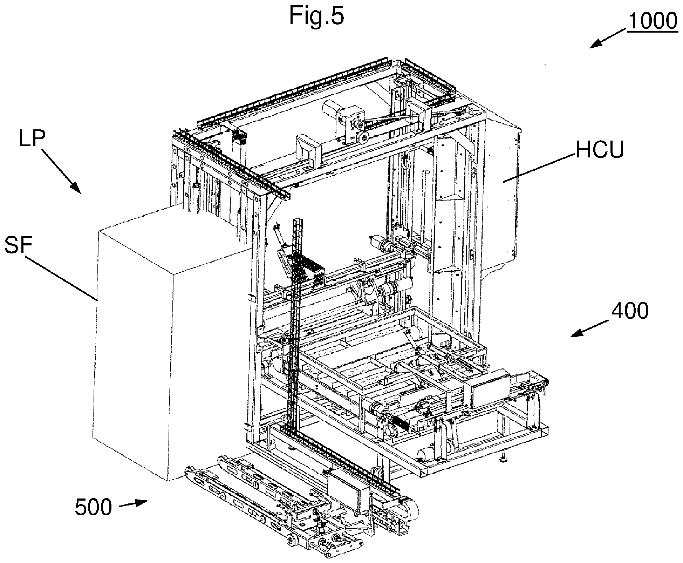

Fig. 2 is a perspective view to the front side of a handling arrangement 1000 according to the present invention for depositing an at least approximately horizontally oriented or aligned sausage-shaped product S received from a clipping machine CM in a storage frame SF (cf. also Fig. 5), and Fig. 3 is a perspective view to the rear side of handling arrangement 1000. Handling arrangement 1000 has an approximately cuboid shape, with front side 101, rear side 102, left side 103, right side 104, top side 105 and bottom side 106.

Handling arrangement 1000 includes a manipulating device 100 for receiving a sausage-shaped product S, and depositing or putting down a sausage-shaped product S on a determined storage place of storage frame SF, and a frame work 200, that carries the components of handling arrangement 1000, like manipulating device 100.

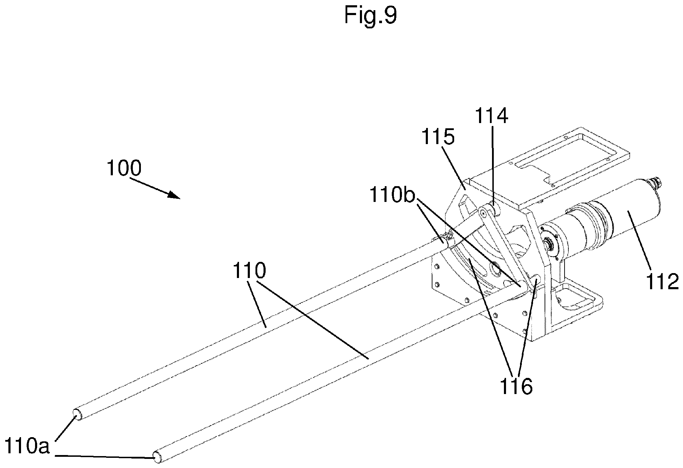

Manipulating device 100 comprises two bar-shaped elements 110 in the form of horizontally arranged bars or rods. Bar-shaped elements or rods 110 are arranged at least approximately horizontally and parallel to each other in a common plane. The right ends of bar-shaped elements or rods 110 are coupled to a drive device 112, preferably an electric motor and further preferably an electric servo motor, by mans of which rods 110 may reversibly be moved towards each other between a release position, as shown in Fig. 2, and a receiving or pick-up position as shown in Fig. 3. Manipulating device 100 will be explained in greater detail in conjunction with Fig. 9.

Frame work 200 forms an approximately cuboid frame, which comprises four at least approximately vertically oriented corner posts 210 and four at least approximately horizontally oriented connecting bars 212, which connect the upper ends of corner posts 210.

Handling arrangement 1000 further comprises a first drive unit 120 for reversibly moving at least approximately vertically manipulating device 100 in a lifting direction LD. First drive unit 120 includes a drive device in the form of an electric motor 122 supported on the top side 105 of handling arrangement 1000, and transmission means which include two transmission shafts 123, which are arranged between the upper ends of corner posts 210, and which extend parallel to each other and from front side 101 to rear side 102 of handling arrangement 1000. The transmission means of first drive unit 120 further includes pulleys 124 in the end region of transmission shafts 123 and the lower ends of corner posts 210.

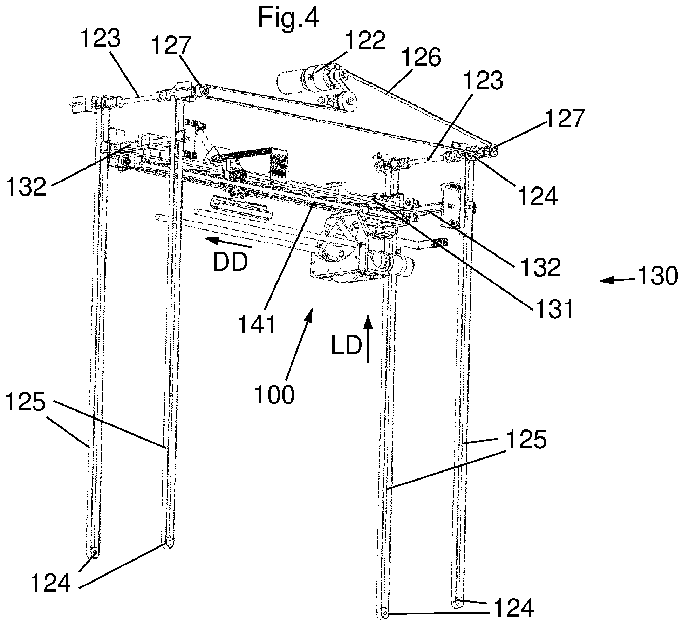

As it particularly can be seen in Fig. 4, which shows first drive unit 120 of the handling arrangement 1000, four drive belts 125 are provided, each of which is wound about one of pulleys 124 at an end region of transmission shafts 123 and pulley 124 at the lower end of respective corner post 210, such that drive belts 125 are arranged parallel to corner posts 210. It has to be understood that corner posts 210 may have an approximately hollow cross-section, such that drive belts 125 are arranged inside corner posts 210, or at least be covered by corner posts 210. First drive unit 120 comprises a further drive belt 126, which is wound about pulleys 127 arranged at the ends of drive shafts 123, which faces to front side 101 of handling arrangement 1000.

A mounting platform 130 is fixed to first drive unit 120. Mounting platform 130 has a mounting base 131 that extends horizontally inside frame work 200 and between left side 103 and its right side 104 of handling arrangement 1000. Mounting bars 132 are arranged at the lateral ends of mounting base 131, and extend from front side 101 to rear side 102 of handling arrangement 1000. The ends of mounting bars 132 are mounted to drive belts 125.

Manipulating device100 is mounted to the lower side of mounting platform 130. Drive belt 126 is drive by motor 122, such that, via drive shafts 123, belts 125 may be driven. Thereby, mounting platform 130 together with manipulating device 100, may reversibly be moved vertically in lifting direction LD by first drive unit 120 inside frame work 200.

As further can be seen in Figs. 2-4, handling arrangement 1000 includes a second drive unit 140 for reversibly moving manipulating device 100 at least approximately horizontally in a depositing direction DD, for positioning a sausage-shaped product S above a storage place of a storage frame and releasing it thereon. A storage frame usually includes several horizontal storage planes or levels arranged vertically above each. On each storage plane, several storage places may be provided, such that a defined number of horizontally oriented or aligned sausage-shaped products may be stored on one storage plane side by side.

Second drive unit 140 comprises two guide bolts 141 arranged horizontally below mounting base 131 of mounting platform 130, and which extend between left and right side 103, 104 of handling arrangement 1000 inside frame work 200. A mounting plate 142 is slidable coupled to guide bolts 141 from below. Mounting plate 142 is coupled to a drive 143, which in this embodiment is an electric motor, via a transmission belt 144, and reversibly shiftable along guide bolts 142. Manipulating device 100 is fixed to the lower side of mounting plate 142, with bar-shaped elements or rods 110, 112 facing towards left side 103 of handling arrangement 1000. Thereby, manipulating device 100 may reversibly be moved by second drive unit 140 in depositing direction DD, such that rods 110, 112 of manipulating device 100 extend to the outside of frame work 200 and into a storage frame SF positioned at left side 103 of handling arrangement 1000 in a loading position LP (cf. Fig. 5), to deposit a sausage-shaped product S on a storage place of storage frame SF.

Handling arrangement 100 further comprises a holding device 300 for holding and securing a sausage-shaped product S on manipulating device 100. Holding device 300, which is preferably arranged approximately centrally mounted on mounting platform 130, comprises a linear drive 310, like a piston/cylinder drive, with a drive element, that may be a piston of the piston/cylinder drive and may reversibly be moved towards rods 110, 112 of manipulating device 100. At the end of the drive element of linear drive 310, a holding element 312 is arranged. Holding element 312 may be driven towards bolts 110, 112 of manipulating device 100, for holding and supporting a sausage-shaped product positioned on bolts 110, 112, e.g. during receiving sausage-shaped product S and during vertically moving manipulating device 100.

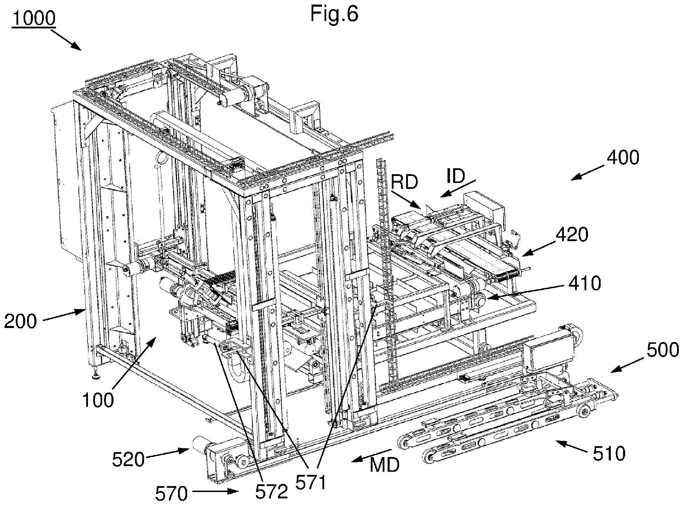

Fig. 5 is a perspective view to the front side of a further embodiment of handling arrangement 1000 according to the present invention, and Fig. 6 is a perspective view to the rear side of handling arrangement 1000 according to Fig. 5.

As can be seen in Figs. 5 and 6, this embodiment of handling arrangement 1000 is identical to that explained in conjunction with Figs. 2-4. Handling arrangement 1000 according to Figs. 5 and 6 additionally includes a transfer arrangement 400 for transferring a horizontally oriented sausage-shaped product S discharged from a clipping machine CM, to handling arrangement 1000, and a storage frame positioning arrangement 500, for positioning a storage frame SF in loading position LP.

In Fig. 5, a storage frame or carriage SR is only schematically shown as a cuboid. Storage frames for horizontally storing good usually consist of vertical corner posts with horizontal storage planes arranged vertically above each other and there between, and in which each storage plane has several storage places for storing horizontally oriented or aligned sausage-shaped products side by side.. Moreover, for moving the storage frames, said storage frames are provided with rollers.

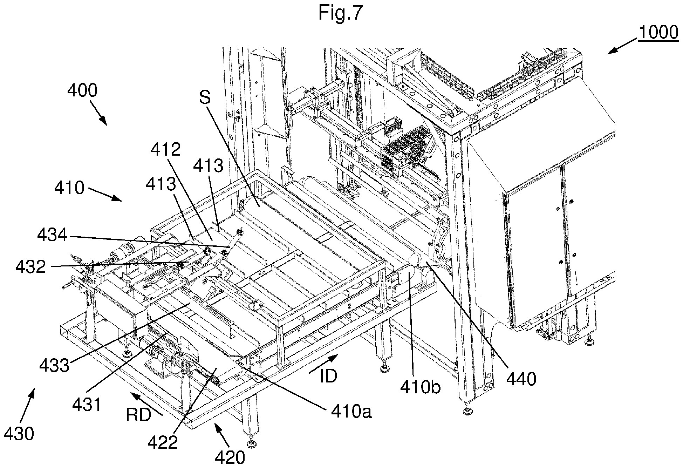

Transfer arrangement 400, which is shown in more detail in Fig. 7, includes an infeed conveyor 410 for feeding sausage-shaped products S in an infeed direction ID towards handling arrangement 100, in particular, to manipulating device 100. Infeed conveyor 410 has an upstream end 410a facing away from manipulating device 100, and a downstream end 410b being positioned close to frame work 200. Infeed conveyor 410 includes an approximately horizontally arranged drive belt 412. However, it is also possible that conveyor belt 412 inclines in infeed direction ID. At the outer surface of conveyor belt 412, dividing elements 413, presently in the form of flat plates, are arranged across to infeed direction ID and in regular intervals. Between two neighbouring dividing elements 413, a compartment is formed for accommodating one sausage-shaped product S.

At upstream end 410a infeed conveyor 410, a receiving conveyor 420 is arranged, for receiving a sausage-shaped product S discharged from a clipping machine CM, in a receiving direction RD aligned across to infeed direction ID. The length of receiving conveyor 420 corresponds to the width of infeed conveyor 410, and is arranged such that a sausage-shaped product received by receiving conveyor 420 is positioned by receiving conveyor 420 in a proper position to be transferred onto infeed conveyor 410.

For transferring a sausage-shaped product S from receiving conveyor 420 onto infeed convenor 410, a pusher assembly 430 is provided above receiving conveyor 420. Pusher assembly 430 includes a pusher element 431, driven by a pusher drive 432, like a linearly acting piston/cylinder drive, for pushing a sausage-shaped product S from receiving conveyor 420 onto upstream end 410a of infeed conveyor 410. Pusher assembly 430 further includes a holding and guiding element 433 arranged above upstream end 410a of infeed conveyor 410, for holding a sausage-shaped product S pushed from receiving conveyor 420, and for guiding said sausage-shaped product S into a compartment formed by two neighbouring dividing elements 413 of conveyor belt 412. Holding and guiding element 433 may be coupled to a drive 434, for positioning holding and guiding element 433 during transmitting a sausage-shaped product S from receiving conveyor 420 onto infeed conveyor 410, an be retracted or lifted from infeed conveyor 410 during conveying sausage-shaped products S towards manipulating device 100.

At downstream end 410b of infeed conveyor 410, a guide plate or chute 440 is arranged, which forms an inclined plane. Chute 440 bridges the gap between downstream end 410b of infeed conveyor 410 and manipulating device 100. Chute 440 enables to handover a sausage-shaped product S discharged from infeed conveyor 410, onto rods 110, 112 of manipulating device 100.

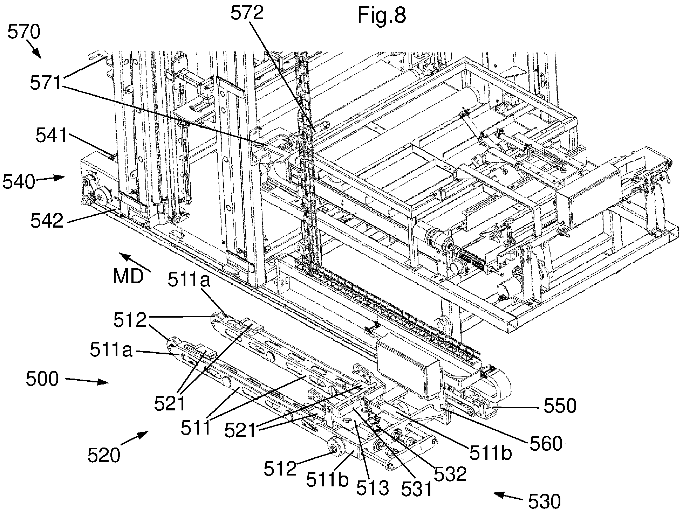

As it can be seen in Fig. 6, in which storage frame SF has been omitted, and Fig. 8, which shown storage frame positioning arrangement 500 in more detail, storage frame positioning arrangement 500 is arranged at left side 103 of handling arrangement 1000 and transfer arrangement 400, respectively.

Storage frame positioning arrangement 500 comprises a storage frame moving unit 510 for moving a storage frame SF from at least a first loading position into an at least second loading position, as it will be explained in detail below. Storage frame moving unit 510, which is reversibly movable along left side 103 of handling arrangement 1000 in moving direction MD, is fork-shaped and includes two tines 511 arranged parallel to each other and to left side 103 of handling arrangement 1000. Tines 511 have front ends 511a and rear ends 511b, and include rollers 512 at each end 511a, 511b. Tines 511 are coupled to each other at their rear ends 511b by a traverse 513.

Storage frame moving unit 510 includes a storage frame support device 520, for supporting a storage frame SF. Storage frame support device 520 includes support plates 521 arranged at the upper surface of tines 511, in the region of their front and rear ends 511a, 511b Support plates 521 are arranged such that their position corresponds to the position of lower cross beams of a storage frame SF to be supported thereon. Support plate 521 are coupled to a lifting mechanism, which in the embodiment of Fig. 8, is arranged inside tines 511, like piston/cylinder drives or a scissor jack assembly, to lift up a storage frame SF, at least during movement.

Storage frame moving unit 510 further includes a storage frame securing assembly 530, for securing a storage frame SF on storage frame moving unit 520. Storage frame securing assembly 530 includes a U-shaped clamping element 531 arranged above rear ends 511b of tines 511, with the open end of the "U" facing in moving direction MD. The ends of the "U" are positioned above support plates 521 of support device 520 at the rear ends 511b of tines 511. A pivot drive 532 is coupled to the bottom portion of the "U" of clamping element 531, for pivoting clamping element 531 about a pivot axis arranged across to moving direction MD, such that the free ends of clamping element 531 may reversibly be moved towards support plates 521 positioned below. Thereby, a cross beam of a storage frame SF supported on support plates 521 is clamped there between, and storage frame SF is secured on storage frame moving unit 510.

In addition, a storage frame alignment unit 570 is provided, which is formed by two hook-shaped alignment elements 571, and which may reversibly be moved between a release positon as shown in Figs. 6 and 8, and an alignment position (not shown). In the alignment position, hook-shaped elements 571 engage the vertical corner posts of a storage frame SF, whereby storage frame SF is aligned in a position centrally on left side 103 of handling arrangement 1000.

One the two hook-shaped element 571 is pivotally mounted at each of corner posts 210 forming left side 103 of handling arrangement 1000. A pivot drive 572, like a piston/cylinder drive, is coupled to each hook-shaped element 571, for moving hook-shaped elements 571 between the release position and the alignment position.

For reversibly moving storage frame moving unit 510 in moving direction MD, storage frame positioning arrangement 500 further comprises a moving unit drive device 540. A beam 550 extends horizontally along left side of handling arrangement 1000, from its rear side 102 to the upstream end of transfer arrangement 400, and thereby connects the lower ends of the respective corner posts 210 of frame work 200. At the rear end of beam 550, a drive 541 in the form of an electric motor is arranged. Drive or motor 541 drives a drive belt 542, which extends from the rear end to the front end of beam 550.

Storage frame moving unit 510 is coupled to drive belt 542 at the rear ends 511b of tines 511 by a connecting and guiding assembly 560, which includes guide elements that engage beam 550, for guiding storage frame moving unit 510 along beam 550 while being moved in moving direction MD.

For controlling the components of handling arrangement 100, a control unit HCU is provided (cf. Fig. 5), to which to components of handling arrangement 1000 are connected. It has to be understood that control unit HCU may also be used to control a clipping machine CM arranged upstream handling arrangement 1000, and from which sausage-shaped products S to be manipulated are received.

Fig. 9 is perspective view to manipulating device 100 according to the present invention.

As explained in conjunction with Fig. 2, manipulating device 100 comprises two horizontally arranged bar-shaped elements or rods 110. Rods 110, which have left ends 110a and right ends 110b, are arranged at least approximately parallel to each other in a common plane. Right ends 110b of rods 110 are coupled to a drive unit 112, by mans of which rods 110 may reversibly be moved towards each other between a release position, as shown in Fig. 2, and a receiving position as shown in Fig. 3. For moving rods 110 between the release position and the receiving position, drive unit 112 may include a respective transmission arrangement, like a cam plate arrangement, an eccentric drive arrangement or a knee lever arrangement.

In the region of the right ends 110b, rods 110 are coupled to second ends 113b of levers 113, the first ends 113a of which are connected to each other above second ends 110b rods 110. First ends 113a of levers 113 form a common pivot point 114, about which levers 113 may be pivoted. A vertically extending support plate 115 is arranged between rods 110 and drive device 112, and carries pivot point 114. In support plate 115, two semi-circular guide slots 116 are arranged, the common centre-point of which is pivot point 114, and into which rods 110 extend with their second ends 113b.

To the upper end of support plate 115, a mounting plate 117 is fixed, by which manipulating device 100 may be mounted to mounting platform 130.

Handling arrangement 1000 may further be provided with a sensor system (not shown), which includes at least a first sensor device for at least detecting the presence or absence of a sausage-shaped product S in the handling arrangement 1000.

Each sensor device, which usually is assigned to a specific unit or device of handling arrangement 1000, may include one or more sensor elements, like optical sensors, proximity sensors, inductive sensors or the like, dependent on the element or function to be detected.

For detecting a sausage-shaped product in handling arrangement 1000, a sensor element may be provided in the region of upstream end 410a of infeed conveyor 400, to detect a sausage-shaped product S being received by receiving conveyor 420 or pushed onto infeed conveyor 410.

A further sensor element may detect the presence or absence of a sausage-shaped product S on rods 110 of manipulating device 100, e.g. for ensuring that sausage-shaped product S received from infeed conveyor 410, is correctly positioned on rods 110 and/ or is correctly released on a storage place in storage frame SF. Another sensor element may detect the presence and the correct positioning of a storage frame SF.

Additionally, collision sensors may be provided, for preventing collisions between units or elements of handling arrangement 100, like manipulating device 100 and frame work 200 or storage frame SF.

It has to be understood that the sensor devices are coupled to control unit HCU, which receives the corresponding signals, and which may control handling arrangement 1000 on the basis of said sensor signals. Control unit HCU may start or stop handling arrangement 1000 upon detecting a sausage-shaped product on a specific position in handling arrangement 100, or a signal detecting the filling degree of storage frame SF.

For handling a sausage-shaped product S, and particularly, for depositing horizontally oriented sausage-shaped product S received from a clipping machine CM, in a storage frame SF, sausage-shaped product S is received by receiving conveyor 420 in receiving direction RD. Sausage-shaped product S may directly be received from clipping machine CM, e.g. from its discharge device 50, or may be delivered to receiving conveyor 420 from a suitable storage device.

After sausage-shaped product S is positioned on receiving conveyor 420, pusher assembly 430 is activated, whereby sausage-shaped product S is pushed from receiving conveyor 420 onto infeed conveyor 410. Holding and guiding element 433 of pusher assembly 430 is positioned such that sausage-shaped product S is transferred into a compartment of infeed conveyor 410, formed by two neighbouring dividing elements 413. Holding and guiding element 433 may also slow down the speed of sausage-shaped product S being pushed from receiving conveyor 420, such that damages to sausage-shaped product S may be omitted. Infeed conveyor 410 transfers sausage-shaped product S in infeed direction ID towards manipulating device 100. Infeed conveyor 410 may act continuously or stepwise, e.g. dependent on the receiving rate of sausage-shaped products S.

For receiving sausage-shaped product S, manipulating device 100 is positioned at the downstream end 410b of infeed conveyor 410, with rods 110 in the receiving position. This means that rods 110 are arranged at a distance to each other which is smaller than the diameter of sausage-shaped product to be manipulated, but large enough to securely support said sausage-shaped product S.

Holding element 312 of holding device 300 is positioned close to rods 110 of manipulating device 100, and behind rods 110 when seen in infeed direction ID, like in a predefined position depending on the diameter of sausage-shaped product S. In addition, a sensor element, like a contact sensor or a proximity sensor may be provided, for moving holding element 312 towards sausage-shaped product S, until it comes in contact with sausage-shaped product S, or is in close vicinity thereto. Holding element 312 thereby prevents sausage-shaped product S from rolling over both rods 110 and falling off from manipulating device 100.

Manipulating device 100 is than lifted upwards by first drive unit 140, until manipulating device 100 has reached a predetermined height that corresponds to the height of a selected storage plane of storage frame SF positioned in loading position LP. Then, second drive unit 140 is activated, and manipulating device 100 is moved in depositing direction DD, at least until sausage-shaped product S supported by rods 110, is completely positioned above the selected storage plane.

It has to be noted that the predefined height of manipulating device relative to the selected storage plane means that manipulating device 100 together with sausage -shaped product S supported by rods 110, may pass over the selected storage plane of storage frame SF, without contacting the storage plane.

Next, drive 112 of manipulating device 100 is activated, to move rods 110 from the receiving position into the release position. In the release position, the distance between rods 110 is at least slightly larger than the diameter of sausage-shaped product S, such that sausage-shaped product S is released onto a storage place of the storage plane.

After releasing sausage-shaped product S onto the storage plane of storage frame SF, manipulating device 100 is moved by second drive unit 140 out of storage frame SF and downwards by first drive unit 120, to receive next sausage-shaped product S from transfer arrangement 400.

Prior activating handling arrangement 100, a storage frame SF is manually or automatically positioned on left side 103 of handling arrangement 1000. Storage frame moving unit 510 of storage frame positioning arrangement 500 is in a retracted position, as shown in Fig. 5.

Storage frame alignment unit 570 is activated, whereby hook-shaped alignment elements 571 are moved into the alignment position. Hook-shaped elements 571 engage the vertical corner posts of a storage frame SF, such that storage frame SF is aligned in a defined position, e.g. centrally on left side 103 of handling arrangement 1000.

Now, storage frame moving unit 510 is moved in moving direction MD, such that support plates 521 of storage frame support device 520, which are arranged at the upper surface of tines 511, are positioned below the lower cross beams of storage frame SF to be supported thereon. Storage frame securing assembly 530 is activated such that storage frame SF is secured on storage frame moving unit 510. Then, the lifting mechanism arranged inside tines 511 lifts up storage frame SF, which thereby gets out of contact to the floor, und may thus reversibly be moved by storage frame moving unit 510 in moving direction MD.

Usually, a storage frame SF is provided with a plurality of approximately horizontally arranged storage planes, which provide several storage places on each storage plane, such that e.g. several sausage-shaped products S may be stored side by side in a row on a storage plane.

After a storage frame SF to be loaded is secured on storage frame moving unit 510, storage frame SF is moved by storage frame moving unit 510 such that the first storage place of the row of storage places on a selected storage plane is positioned in loading position LP. That means, said storage place is aligned with the central axis of a sausage-shaped product S supported on rods 110 of manipulating device 100. In this position of storage frame SF, a sausage-shaped product S is stored on the first storage place on the selected storage plane of storage frame SF by manipulating device 100.

After manipulating device 100 has been retracted from storage frame SF, storage frame moving unit 510 moves storage frame SF in moving direction MD about a defined length, such that the next storage place of the row of storage places on the storage plane is aligned with the central axis of a sausage-shaped product S supported on manipulating device 100, manipulating device 100 places a next sausage-shaped product S on the second storage place in the row of storage places on the storage plane of storage frame SF. These steps are repeated until all storage places on the storage plane are filled with sausage-shaped products S.

In the case that storage frame SF comprises a further storage plane onto which sausage-shape products are to be stored, storage frame SF is moved by storage frame moving unit 510 such that the first storage place of the row of storage places on the next storage plane is positioned in loading position LP. The storage plane is filled with further sausage-shaped products S accordingly.

Loading storage frame SF in this manner may be started by either filling the lower most storage plane followed by the next storage plane above the lowermost storage plane, until the uppermost storage plane is filled with sausage-shaped products, or starting by the uppermost storage plane and filling the storage planes in downward direction up to the lowermost storage plane.

Alternatively, it is also possible that, after a sausage-shaped product S is stored on the first storage plane of the uppermost storage plane (or the lowermost storage plane respectively). Storage frame SF, in this filling mode, remains in its position. Manipulating device 100, with a further sausage-shaped product S supported thereon, is lifted by first drive unit 140, until manipulating device 100 has reached a predetermined height in front of the storage plane immediately below the uppermost storage plane (or above the lowermost storage plane respectively), and places the sausage-shaped product S on the first storage place on this storage plane. In this manner, the column formed by the fist storage places on each storage plane may be filled with sausage-shaped products, either from above or from below. Thereafter, storage frame SF is moved by storage frame moving unit 510 in moving direction MD about a defined length, such that the second storage place of the row of storage places on the storage plane is aligned with the central axis of a sausage-shaped product S supported on manipulating device 100. Manipulating device 100 places the next sausage-shaped products S on the second storage place in the row of storage places, until the next column of storage places is filled with sausage-shaped products S. This operation is repeated until all columns of storage places are filled with sausage-shaped products S.

After all storage places on all storage planes of storage frame SF are filled with sausage-shaped products S, storage frame moving unit 510 moves storage frame SF in a position centrally on left side 103 of handling arrangement 100, and the lifting mechanism is activated to set down storage frame SF on the floor. Storage frame alignment unit 570 is activated, whereby hook-shaped elements 571 engage with the vertical corner posts of storage frame SF. Now, storage frame moving unit 510 may be retracted from storage frame SF, by moving it in the counter direction of moving direction MD. In this situation, storage frame alignment unit 570 prevents storage frame SF from unintentionally being moved or shaken by storage frame alignment unit 570.

Then, loaded storage frame SF may be removed from handling arrangement 100, and an empty storage frame may be provided to handling arrangement 100 to be loaded next.

First and second drive units 120, 140 according to the embodiment disclosed in conjunction with Figs. 2 to 8, include drive belts. However, for executing a linear movement, drive units may also include other drive devices, like piston/cylinder drives or spindles drives.

Moreover, as explained above, at first, drive unit 120 moves manipulating device 100 vertically in lifting direction LD, and thereafter, drive unit 124 is activated for horizontally moving manipulating device 100 towards storage frame SF. It is also possible that drive units 120, 140 are activated at the same time or at least temporarily overlapping, such that, during the vertical movement of manipulating device 100, also a horizontal movement may be executed, whereby the transfer time for transferring a sausage-shaped product S to a storage frame SF may be shortened.

## Claims

1. A handling arrangement (1000) for depositing an at least approximately horizontally oriented sausage-shaped products (S) received from a clipping machine (CM) for producing sausage-shaped products (S) in a storage frame (SF) arranged in a loading position and having at least one storage place, the handling arrangement (1000) comprising:
a manipulating device (100) for receiving and supporting a horizontally oriented sausage-shaped product (S), and for depositing a sausage-shaped product (S) on a storage place of a storage frame (SF),
wherein the handling arrangement (1000) includes a first drive unit (120) for moving at least approximately vertically the manipulating device (100), and for positioning the manipulating device (100) in front of a a storage frame (SF), and
a second drive unit (140) for moving at least approximately horizontally the manipulating device (100) for positioning a sausage-shaped product (S) above and releasing onto a storage place of a storage frame (SF).

2. The handling arrangement (1000) according to claim 1,
wherein the manipulating device (100) comprises support elements (110), preferably two support elements (100) for supporting the horizontally oriented sausage-shaped product (S), preferably wherein the support elements (110) comprises two bar-shaped elements (110) arranged at least substantially parallel to each other in a common at least approximately horizontal plane.

3. The handling arrangement (1000) according to claim 2,
wherein the manipulating device (100) comprises a drive unit (112) for moving the support elements (110) at least between a receiving position, in which a sausage-shaped product (S) is received from the clipping machine (CM), and a release position, in which a sausage-shaped product (S) is released from the manipulating device (100).

4. The handling arrangement (1000) according to any of claims 1-3,
further comprising a holding device (300) for temporarily holding and securing a sausage-shaped product (S) on the manipulating device (100).

5. The handling arrangement (1000) according to any one of claims 1-4,
further comprising a transfer arrangement (400) for transferring a horizontally oriented sausage-shaped (S) product discharged from the clipping machine (CM) to the handling arrangement (1000), preferably wherein the transfer arrangement (400) further includes an infeed conveyor (410) for feeding a sausage-shaped product (S) towards the handling arrangement (1000).

6. The handling arrangement (1000) according to claim 5,
wherein the transfer arrangement (400) includes a receiving conveyor (420) for receiving a sausage-shaped product (S) discharged from a clipping machine (CM).

7. The handling arrangement (1000) according to any of claims 5-6,
wherein the transfer arrangement (400) further includes a pusher assembly (430), for pushing a sausage-shaped product (S) received by the receiving conveyor (420) in the infeed direction (ID) onto the infeed conveyor (410).

8. The handling arrangement (1000) according to any of claims 1-7,
further comprising a storage frame positioning arrangement (500), for positioning a storage frame (SF) in a loading position.

9. The handling arrangement (1000) according to claim 8,
wherein the storage frame positioning arrangement (500) comprises a storage frame moving unit (510) for reversibly moving a storage frame (SF) from a first loading position to an at least second loading position, and preferably wherein the storage frame positioning arrangement (500) includes a storage frame securing assembly (520), for securing a storage frame (SF) on the storage frame moving unit (510).

10. The handling arrangement (1000) according to any of claims 7-8,
wherein the storage frame positioning arrangement (500) further includes a storage frame alignment unit (570) for aligning a storage frame (SF) at least in an insertion position and/or a removal position.

11. The handling arrangement (1000) according to any of claims 1-10,
further comprising a control unit (HCU) adapted for controlling the operation of at least the handling arrangement (1000).

12. The handling arrangement (1000) according to claim 11,
wherein the control unit (HCU) is further adapted to coordinate the operation of the handling arrangement (1000) with the operation of a clipping machine (CM).

13. The handling arrangement (1000) according to any of claims 1-12,
further comprising a sensor system which includes at least a first sensor device for at least detecting the presence or absence of a sausage-shaped product (S) in the handling arrangement (1000).

14. A method for depositing an at least approximately horizontally oriented sausage-shaped products (S) discharged from a clipping machine (CM) in a discharge direction, onto a storage place of a storage frame (SF) by a handling arrangement (1000) with the handling arrangement (1000) including a manipulating device (100) for receiving and supporting a sausage-shaped product (S), and for positioning a sausage-shaped product (S) on a storage place of a storage frame (SF), the method comprises the steps of:
receiving by the manipulating device (100) an approximately horizontally oriented sausage-shaped product (S) discharged from a clipping machine (CM), and
positioning the sausage-shaped product (S) on a storage place of the storage frame (SF).

15. The method according to claim 14,
wherein the handling arrangement (1000) further comprises a transfer arrangement (400) for transferring a horizontally oriented sausage-shaped product (S) discharged from a clipping machine (CM) to the handling arrangement (1000), the method further comprises the step of:
receiving an approximately horizontally oriented sausage-shaped product (S) discharged from a clipping machine (CM), and transferring a sausage-shaped product (S) by the transfer arrangement (400) towards the handling arrangement (1000).
